# EUROPÄISCHE PATENTSCHRIFT

(11) **EP 0 999 352 B1**
(45) Veröffentlichungstag und Bekanntmachung des Hinweises auf die Patenterteilung: **19.09.2001**
(21) Anmeldenummer: 99121379.4
(22) Anmeldetag: 27.10.1999
(51) Int. Cl.: F01N 11/00

(54) **Verfahren und Einrichtung zur Kontrolle und Beobachtung der Alterung eines Katalysators im Abgas von Verbrennungskraftmaschinen und des Schadstoffausstosses**
Method and apparatus for controlling and monitoring the ageing of a catalytic converter in the exhaust gas of internal combustion engines and of the harmful emissions
Procédé et dispositif de contrôle et de surveillance de vieillissement d'un catalyseur dans le gaz d'échappement de moteurs à combustion interne et de l'émission des produits nocifs

(30) Priorität: 02.11.1998 DE 19850338
(43) Veröffentlichungstag der Anmeldung: 10.05.2000
(73) Patentinhaber: Heraeus Electro-Nite International N.V., 3530 Houthalen (BE)
(72) Erfinder: Möbius, Hans-Heinrich, Prof. Dr., 17489 Greifswald (DE)
(74) Vertreter: Kühn, Hans-Christian

(56) Entgegenhaltungen:
- DE-A- 4 211 092
- DE-A- 4 330 997
- DE-A- 19 732 167
- GB-A- 2 310 044
- PATENT ABSTRACTS OF JAPAN vol. 1999, no. 13, 30. November 1999 (1999-11-30) & JP 11 229854 A (TOYOTA MOTOR CORP), 24. August 1999 (1999-08-24)
- M. SIDERIS: "Methods for monitoring and diagnosing the efficiency of catalytic converters" 1998 , ELSEVIER SCIENCE B.V. , AMSTERDAM XP002132451 * Seite 335 - Seite 349; Abbildungen *

## Beschreibung

Die Erfindung betrifft ein Verfahren und eine Einrichtung zur Kontrolle und Beobachtung der Alterung eines Katalysators im Abgas von Verbrennungskraftmaschinen, beispielsweise in Kraftfahrzeugen, und zur Registrierung der Zeiten des größten Schadstoffausstoßes der Verbrennungskraftmaschine.

Katalysatoren im Abgassystem von Verbrennungskraftmaschinen beginnen erst nach Erreichen einer relativ hohen Arbeitstemperatur die Schadstoffe im Abgas, also Kohlenwasserstoffe, Kohlenmonoxid und Stickoxide, weitgehend in unschädliche Stoffe umzuwandeln. im ersten Zeitintervall nach dem Starten der Verbrennungskraftmaschine können die Schadstoffe praktisch ungehindert den Katalysator passieren. Deshalb sehen die neueren Abgasbebestimmungen Meßzyklen vor, die besonders Kalt- und Warmstartphasen einschließen. Es zeigt sich dabei, daß vom Kohlenwasserstoffausstoß während solcher Meßzyklen der Hauptteil während der Kaltstartphasen anfällt. Um den Schadstoffausstoß zu verkleinern, muß also besonders eine niedrige "Anspringtemperatur" des Katalysators und damit nach dem Starten eine möglichst kurze "Anspringzeit" ohne Abgasreinigung angestrebt werden. Zur Verkürzung der Anspringzeit gibt es bereits viele Vorschläge.

Zur Kontrolle der Arbeit des Katalysators durch OBD (on board diagnose) werden viele Versuche mit Sensoren insbesondere für Kohlenwasserstoffe (CHₓ) und für Stickoxide (NOₓ) gemacht. Messungen mit aufwendigen Meßsystemen (mit Flammenionisationsdetektoren : FID) zeigen jedoch, daß hinter kommerziellen heißen neuen oder bereits längere Zeit genutzten Abgaskatalysatoren zumindest die CHₓ-Konzentrationen außerordentlich klein sind. Sie lassen sich hier selbst mit dem FID nicht völlig sicher messen und noch weniger mit den bisher bekannten Sensoren für CHₓ oder NOₓ quantitativ bestimmen. Daher ist es auch schwer möglich, mit solchen Mitteln etwa am allmählichen Anstieg der CHₓ-Konzentration im Abgas hinter dem Katalysator dessen Alterung zu verfolgen.

Zur Einschätzung der Alterung von Abgaskatalysatoren sind eine Reihe von Verfahren vorgeschlagen worden, bei denen die Schadstoffkonzentrationen im Abgas nicht direkt gemessen werden. Häufig wird nicht nur mit einer Lambdasonde, die ein Sauerstoffsensor ist, vor dem Katalysator das nötige Pendeln zwischen fett und mager der Kraftstoffzufuhr geregelt, sondern mit einer zweiten Lambdasonde hinter dem Katalysator auch dessen Wirkung verfolgt (DE 23 04 622, 24 44 334, 35 00 594, 41 39 560, 42 11 116, 43 37 793). Dabei werden, um die Funktionsfähigkeit des Katalysators einschätzen zu können, bestimmte Beschickungsprogramme auf das Katalysatorsystem und verschiedene Verknüpfungen der Signale angewendet. Weiterhin wurde vorgeschlagen, die Katalysatoraktivität mit je einem Temperaturfühler kurz vor und innerhalb des Katalysators zu kontrollieren (DE 26 43 739). Diese Vorschläge beziehen sich in der Regel auf den Betriebszustand des Katalysatorsystems und erbringen zum Anspringen des Katalysators keine direkte Aussage.

Die Alterung des Abgaskatalysators macht sich aber insbesondere am Anstieg seiner Anspringtemperatur und damit auch der Anspringzeit bemerkbar. Deshalb wurde bereits vorgeschlagen, die Anspringtemperatur des Katalysators zu ermitteln und damit die Funktionsfähigkeit des Katalysators zu beurteilen. Dabei geht man davon aus, daß die Temperatur im Abgaskatalysator rascher ansteigt, sobald darin die Konvertierung beginnt, so daß man die Anspringtemperatur sowie die Zeitspanne bis zum Beginn der Konvertierung unmittelbar aus der Temperatur-Zeit-Kurve ablesen und mit vorgegebenen Schwellenwerten vergleichen kann (DE 42 11 092). Vorteilhaft soll es sein, wenn die Temperatur speziell in dem Bereich des Katalysatorsystems ermittelt wird, der für die Warmlaufemission maßgeblich ist (DE 43 30 997). Allerdings bildet sich die Anspringtemperatur in der Temperatur-Zeit-Kurve gar nicht scharf ab; sie wird möglicherweise durch endotherme Desorptionsprozesse während des Anspringens verwischt. Mit dem allmählichen Altern des Katalysators wird die Anspringtemperatur immer weniger gut erkennbar. Deshalb befriedigen diese Verfahren offenbar nicht. Als allmählicher Vorgang läßt sich das Altem bis zu dem Punkt, an dem man den Katalysator für funktionsunfähig erklärt, mit den bisher bekannten Verfahren nicht verfolgen.

Das Dokument GB 23 100 44 offenbart ein verfahren zur Beobachtung der Alterung eines Abgaskatalysators, wobei nach Anlassen der Verbrennungs kraftmaschine ein Abgasanalysator die konzentration von drei unterschiedlichen Gaskomponenten des Abgases ermitteln kann und wobei aus dem konzentrationsverlauf der einzelyen Gas komponenten über der Zeit die Anspringzeit des Abgaskatalysators erfaßt wird.

Auf Motorprüfständen kann man das Anspringen des Katalysators mit Hilfe teurer stationärer FID-Geräte am drastischen Abfall der CHₓ-Konzentration im Abgas deutlich beobachten. An Bord von Fahrzeugen sind entsprechende wiederholte zuverlässige Beobachtungen zur Kontrolle der Alterung des Abgaskatalysators und der Schadstoffemission mit einfachen Mitteln bisher nicht möglich.

Es besteht die Aufgabe, die dem Stand der Technik anhaftenden Nachteile zu beseitigen, insbesondere, ein Verfahren mit der zugehörigen Einrichtung anzugeben, mit dem man die Alterung von Abgaskatalysatoren nicht nur gelegentlich, sondern in ihrem ganzen allmählichen Verlauf kontrollieren kann und das zugleich zu einer Größe führt, die charakteristisch für einzelne Startphasen oder für die Summe der in den Startphasen ausgestoßenen Schadstoffe ist.

Diese Aufgabe wird erfindungsgemäß mit einem Verfahren dadurch gelöst, daß nach dem Anlassen der Verbrennungskraftmaschine die Anspringtemperatur des Katalysators mittels eines Temperaturmeßfühlers im Katalysator als diejenige Temperatur erfaßt wird, bei der ein Sensor für Sauerstoff, Kohlendioxid, Wasserdampf oder brennbare Stoffe im Abgas hinter dem Katalysator das Anspringen des Katalysators durch eine Signaländerung infolge einer sprunghaften Änderung der Konzentration des Stoffes oder Stoffgemisches, für den der Sensor empfindlich ist, anzeigt, und daß die Anspringzeit vom Anlassen der Verbrennungskraftmaschine bis zum sensorindizierten Anspringen des Katalysators gemessen wird. Die Anspringtemperatur wird genau an dem Zeitpunkt gemessen, an dem die Änderung der Konzentration des mit dem Sensor erfaßten Stoffes oder Stoffgemisches im Abgas durch einen Extremwert geht, wobei dieser Extremwert durch Bildung der Differenzen der in gleichkurzen Zeitabständen direkt gemessenen Sensorsignale oder daraus berechneten mathematischen Ausdrücke oder damit berechneten Konzentrationen erhalten werden kann.

Die sensorindizierte Anspringtemperatur sowie auch die Anspringzeit werden extern in Werkstätten oder Kontrollstationen gemessen und/oder im Kraftfahrzeug ermittelt und an Bord angezeigt. Vorteilhafterweise werden die nach jedem Anlassen ermittelten Werte fortlaufend an Bord gespeichert und zu Aussagen über Alterung und Schadstoffausstoß verarbeitet. Als Sensor verwendet man einen, der eine kürzere Zeit zur Heizung auf Betriebstemperatur benötigt als der Abgaskatalysator und der den Konzentrationsänderungen sofort sehr schnell folgen kann. Falls solche Voraussetzungen nicht gegeben sind, ist die Aufheizung des Sensors auf seine Betriebstemperatur jeweils vor dem Anlassen vorzusehen.

Vorteilhaft ist es, wenn als Sensor für die Bestimmung des Anspringens des Katalysators ein Sauerstoffsensor verwendet wird, bei dem die katalytische Aktivität des Meßfühlers kleiner als die gebräuchlicher Lambdasonden ist. Insbesondere ist es zweckmäßig, daß der verwendete Sauerstoffsensor auf eine Temperatur gebracht wird, bei der seine Brenngassensitivität kleiner als seine Sauerstoffsensitivität ist.

Vorteilhaft ist es weiterhin, daß der Temperaturmeßfühler und/oder der Sensor nur zeitweilig für einzelne Kontrollmessungen in einem Kraftfahrzeug in Positionen zur Ermittlung der Anspringtemperatur und/oder Anspringzeit des Katalysators gebracht werden oder daß der Temperaturmeßfühler und/oder der Sensor fest im Kraftfahrzeug installiert sind und damit jeweils nach dem Anlassen der Verbrennungskraftmaschine an Bord die Anspringtemperatur und/oder Anspringzeit ermittelt und gespeichert werden.

Zweckmäßig wird die Erhöhung der Anspringtemperatur des Katalysators über die Anspringtemperatur des neuen Katalysators als ein die Alterung des Katalysators charakterisierender Wert verwendet oder das Mittel mehrerer (beispielsweise 5 bis 10) nacheinander gemessener Anspringtemperaturen wird gebildet und die Erhöhung dieses Mittelwertes über den Mittelwert am Anfang der Nutzung des neuen Katalysators als ein die Alterung des Katalysators charakterisierender Wert verwendet.

Die Zeit vom Anlassen der Verbrennungskraftmaschine bis zum Anspringen des Abgaskatalysators hängt stark von der Temperatur des Katalysators im Moment des Anlassens der Maschine ab. Das erfindungsgemäße Verfahren ist aber weiterhin dadurch vorteilhaft zu betreiben, daß nur die Zeiten vom Durchlaufen einer festgelegten unteren Temperatur des Katalysators bis zum Erreichen der Anspringtemperatur des Katalysators gegenüber dieser Zeit bei dem neuen Katalysator als "basisnormierte Anspringzeiten" zur Charakterisierung der Alterung des Katalysators verwendet werden, wobei als untere Temperatur ein Wert 20 bis 100 Kelvin über dem Jahresmittel der Umgebungstemperatur im Einsatzgebiet des Kraftfahrzeugs festgelegt wird, oder daß allein oder zusätzlich das Mittel mehrerer (beispielsweise 5 bis 10) basisnormierter Anspringzeiten des Katalysators gebildet und die Zunahme des Mittelwertes der basisnormierten Anspringzeiten gegenüber dem Mittelwert am Anfang der Nutzungen des neuen Katalysators gemessenen basisnormierten Anspringzeiten als ein die Alterung des Katalysators charakterisierender Wert verwendet wird.

Zweckmäßig werden die Messungen zur Verfahrensdurchführung nur ausgelöst, wenn die Temperatur des Katalysators eine untere Temperatur, die so festgelegt ist, daß die Aufheizzeit des verwendeten Sensors jedenfalls kürzer als die Anspringzeit des Katalysators ist, nicht überschreitet.

Eine weitere vorteilhafte Ausgestaltung des erfindungsgemäße Verfahrens besteht darin, daß die Summe aller gemessenen und gespeicherten vollen Anspringzeiten gebildet und als ein für den Hauptteil der Schadstoffemission charakteristischer Wert an Bord gespeichert und dort und/oder in einer Werkstatt oder Kontrollstation lesbar gemacht wird und daß diese Summe durch die seit Beginn der Messungen von dem Kraftfahrzeug gefahrene Strecke dividiert und damit ein für die Nutzung des betreffenden Kraftfahrzeugs charakteristischer Wert gewonnen wird.

Für die Schonung des Gassensors ist es zweckmäßig, daß seine Beheizung nach Nutzung in der Startphase der Verbrennungskraftmaschine abgeschaltet oder reduziert wird.

Die erfindungsgemäße Einrichtung zur Durchführung des Verfahrens ist dadurch gekennzeichnet, daß Signalleitungen eines (an einem geeigneten Ort) im oder am Katalysator positionierten Temperaturmeßfühlers und eines im Abgas hinter dem Katalysator angeordneten Sensors für Sauerstoff, Kohlendioxid, Wasserdampf oder brennbare Stoffe im Abgas sowie eine das Anlassen der Verbrennungskraftmaschine übermittelnde Leitung verbunden sind mit einer extern verfügbaren oder im Kraftfahrzeug installierten Auswerte- und Recheneinheit, die dafür eingerichtet ist, die Anspringtemperatur des Katalysators und/oder die volle Anspringzeit und/oder die basisnormierte Anspringzeit des Katalysators zu ermitteln, verfahrensgemäß zu verrechnen, zu speichern und/oder rechnerisch gebildete, für die Alterung des Katalysators und für den Hauptteil des Schadstoffausstoßes sowie für einen Aspekt der Nutzung des Fahrzeugs charakteristische Werte extern an einem Kontrollgerät ablesbar und/oder an einem Bordinstrument direkt anzeigbar zu machen.

Zweckmäßig ist es, daß der Temperaturmeßfühler und/oder der Sensor sowie die Auswerteund Recheneinheit als Einzelteile für den Einsatz an verschiedenen Kraftfahrzeugen ausgeführt sind, wenn nur gelegentliche Kontrollen vorgesehen sind, oder daß der Temperaturmeßfühler und der Sensor sowie die Auswerte- und Recheneinheit mit Speichern für ermittelte Kenndaten fest im Kraftfahrzeug installiert sind, insbesondere, daß die Auswerte- und Recheneinheit in einen an Bord des Fahrzeugs befindlichen Computer integriert ist.

Weitere erfindungsgemäße Einzelheiten des Verfahrens und der Einrichtung zur Durchführung des Verfahrens sind den Unteransprüchen zu entnehmen.

Ein großer Vorteil des beschriebenen Verfahrens besteht darin, daß wichtige Daten zur Alterung des Abgaskatalysators, zur Schadstoffemission und zu einem Aspekt der Nutzung des Fahrzeugs mit Verbrennungskraftmaschine, auf das es angewandt wird, mit Hilfe bereits relativ gut bekannter Sensoren und durch Anwendung im Prinzip bekannter Rechentechnik gewonnen werden. Dadurch ist das Verfahren relativ leicht unter Nutzung gegebener Erfahrungen realisierbar.

Ein weiterer großer Vorteil besteht darin, daß das Verfahren von Werkstätten und Kontrollstationen auf Fahrzeuge angewendet werden kann, in denen kein entsprechendes Meßsystem installiert ist. Andererseits gestattet das Verfahren bei Einbau der Einrichtung ins Fahrzeug eine komfortable ständige Kontrolle des Abgassystems durch den Fahrzeugbetreiber.

Ausführungsbeispiele der Erfindung werden nachstehend anhand von Zeichnungen erläutert.

In der Zeichnung zeigt
- Fig. 1: Meßergebnisse, wie sie auf Motorprüfständen anfallen,
- Fig. 2: schematisch die Verknüpfung der Elemente zur Durchführung des Verfahrens an einem Fahrzeug ohne installierte Einrichtung und
- Fig. 3: schematisch die Verknüpfung der Elemente zur Durchführung des Verfahrens bei im Fahrzeug installierter Einrichtung.

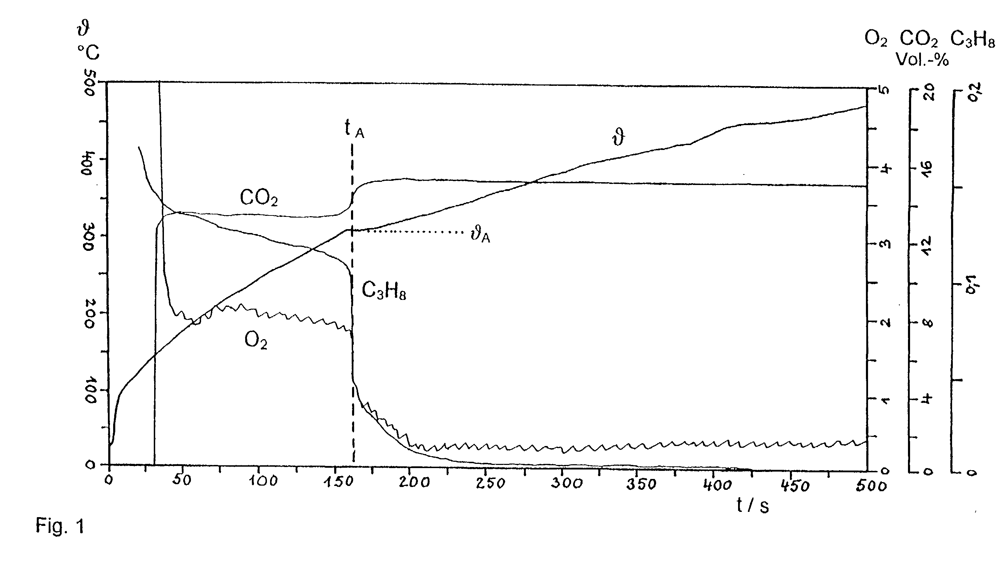

In Fig. 1 ist ein Beispiel für den Verlauf der Konzentrationen des Sauerstoffs (O2), des Kohlendioxids (CO₂) und des Kohlenwasserstoffs Propan (C₃H₈) in den ersten 500 Sekunden nach dem Anlassen der Verbrennungskraftmaschine dargestellt. Weiterhin ist der Verlauf der Celsius-Temperatur ϑ im Abgaskatalysator während dieser Zeit eingezeichnet. Man erkennt, daß bereits nach kurzer Zeit die Sauerstoffkonzentration unter den Wert in Luft (20,6 Vol.-%) sinkt und die Konzentration des Kohlendioxids weit über den Wert in Luft (0,036 Vol.-%) ansteigt, was eine entsprechende Teilverbrennung in den sich rasch erhitzenden Zylindern der Verbrennungskraftmaschine anzeigt. Nach einer weiteren Zeit treten sprunghafte Änderungen der gemessenen Konzentrationen des Sauerstoffs, des Kohlendioxids und des Propans ein. Für die Konzentrationen sind unterschiedliche Maßstäbe gewählt worden, wodurch sich in Fig. 1 unterschiedlich große Konzentrationssprünge ergeben. Wesentlich ist, daß außer der scharfen Änderung der Konzentration des Kohlenwasserstoffs zum selben Zeitpunkt auch sprunghafte Änderungen der O₂- und CO₂-Konzentration deutlich sind. Zweifellos markieren alle drei Konzentrationssprünge denselben Vorgang, nämlich das Anspringen des Abgaskatalysators. Aus der Temperatur-Zeit-Kurve ist der Moment dieses Anspringens nicht deutlich erkennbar. Die Anspringtemperatur ϑ_{A} wird jedoch exakt mit der Anspringzeit t_{A} erhalten, die sich mit den Sprüngen der Sensorsignale oder der damit berechneten Konzentrationen ergibt. Im vorliegenden Beispiel liegt ϑ_{A} bei 310 °C und t_{A} bei 162 s. Diese Werte ergeben sich mit dem Verlauf der O₂- und CO₂-Konzentration ebenso wie mit dem Verlauf der C₃H₈-Konzentration. Es wurde also gefunden, daß sich Anspringtemperatur und Anspringzeit des Abgaskatalysators mit O₂- und CO₂-Sensoren prinzipiell ebensogut wie mit Kohlerwasserstoff-Sensoren ermitteln lassen. Auch die Summe der Konzentrationen brennbarer Stoffe oder die Restverbrennungsenthalpie des Abgases am Meßpunkt hinter dem Abgaskatalysator und weiterhin die Konzentration des Wasserdampfs im Abgas ändern sich zum selben Zeitpunkt infolge der im Abgaskatalysator einsetzenden Nachverbrennung sprunghaft. Daraus folgt der Vorteil des Verfahrens, daß man ganz verschiedene Sensoren einsetzen kann, um den Zeitpunkt desselben Vorgangs zu bestimmen.

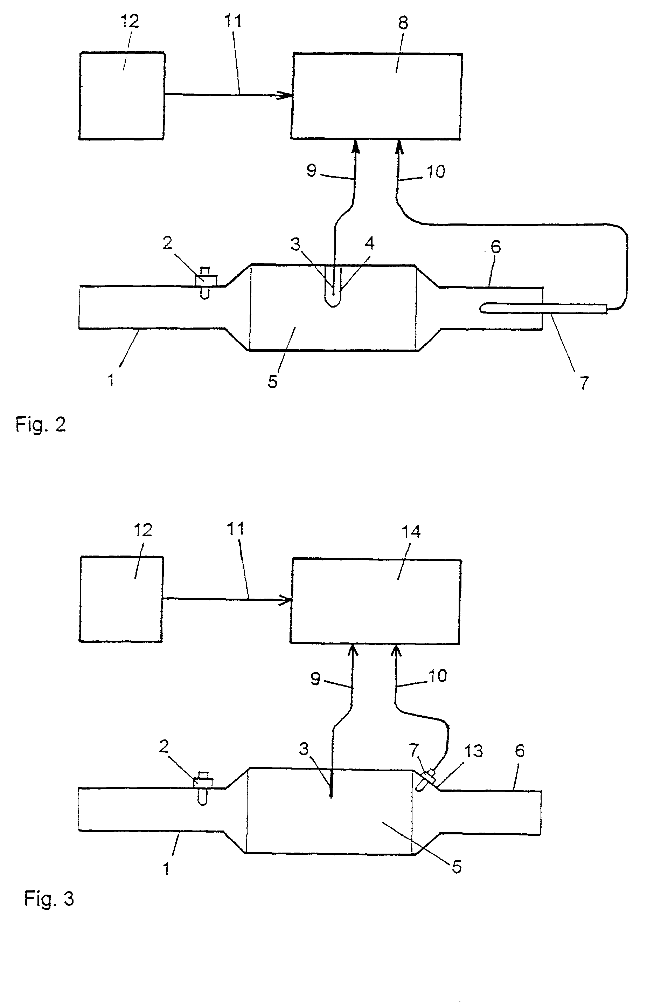

In Fig. 2 ist die Auspuffanlage 1 eines Kraftfahrzeugs mit einer (bekannten) Lambdasonde 2 zur Regelung des Verhältnisses von Kraftstoff und Luft im Verbrennungsgemisch angedeutet. Der Temperaturfühler 3 liegt hier mit seinem Meßpunkt in einem von außen zugänglichen Einzug 4 im Abgaskatalysator 5. Hinter dem Abgaskatalysator 5 ist in das Abgasrohr 6 beispielsweise eine Sonde mit einem Sauerstoffsensor 7 eingeschoben, dessen Meßfühler geringe katalytische Aktivität aufweist und der sich innerhalb kurzer Zeit beispielsweise auf 800 °C aufheizen läßt. Eingeschaltet mit dem Anlassen der Maschine kommt er vor Erreichen der Anspringtemperatur des Abgaskatalysators 5 auf seine Betriebstemperatur, bei der seine Brenngassensitivität kleiner als seine Sauerstoffsensitivität ist. Die externe Auswerte- und Recheneinheit 8 ist durch die Signalleitungen 9 und 10 mit dem Temperaturmeßfühler 3 und mit dem Sensor 7 verbunden. Außerdem besteht über die Signalleitung 11 eine Verbindung, die den Zeitpunkt des Anlassens der Verbrennungskraftmaschine beispielsweise aus der Zündanlage 12 übermittelt.

in der externen Auswerte- und Recheneinheit 8 erfolgt je nach Notwendigkeit eine Impedanzwandlung der Signale, im Abstand von einigen Hundertstel Sekunden die Berechnung der Celsius-Temperatur des Abgaskatalysators 5, aus den Signalen des Sensors 7 die Bildung von Differenzen, die der Ermittlung des Extremwerts der Gaskonzentrationsänderungen dienen, und die Ausgabe der Temperatur bei Erreichen dieses Extremwerts und/oder der seit dem Durchlaufen z. B. von 100 °C bis zum Anspringen vergangenen Zeit (der basisnormierten Anspringzeit).

In Fig. 3 ist die Einrichtung bei fester Installation im Fahrzeug gezeigt. Der Temperaturfühler 3 liegt hier mit seinem Meßpunkt in einem zweckmäßig ausgewählten Teil des Abgaskatalysators 5, der Sensor 7 im Ausgangsstück 13 des Gehäuses vom Abgaskatalysator 5.

Der feste Einbau der Einrichtung ins Fahrzeug bringt gegenüber der externen Einrichtung den Vorteil, daß die an Bord befindliche Auswerte- und Recheneinheit 14 ein umfangreicheres und informativeres Programm ermöglicht. Außer der Impedanzwandlung von Signalen, der Berechnung der Temperatur des Abgaskatalysators 5, der Bildung von Differenzen aus den Signalen des Sensors 7, die der Ermittlung des Extremwerts der Gaskonzentrationsänderungen dienen, und der Ausgabe der Temperatur bei Erreichen dieses Extremwerts und damit der aktuellen Anspringtemperatur und/oder der Ausgabe der Anspringzeit, die zwischen einem gewählten Temperaturwert und dem Erreichen der Anspringtemperatur abläuft, (der basisnormierten Anspringzeit), kann diese Einheit 14 zusätzlich Mittelungen über eine gewählte Anzahl gespeicherter Ergebnisse mehrerer Anlaßvorgänge vornehmen und die Temperatur des Katalysators 5 beim Anlassen und Auslösen der Verfahrensdurchführung berücksichtigen.

Weiterhin kann sie alle im Fahrzeug gemessenen vollen Anspringzeiten vom Anlassen der Maschine bis zum Erreichen der Anspringtemperatur summieren und damit charakteristische Werte für die Schadstoffemission liefern. Die Ausgabe solcher Werte kann an Geräte an Bord und/oder bei Abruf an Werkstätten oder Kontrollstationen außerhalb des Kraftfahrzeugs vorgesehen werden.

## Patentansprüche

1. Verfahren zur Kontrolle und Beobachtung der Alterung eines Katalysators (5) im Abgas von Verbrennungskraftmaschinen und zur Registrieung der Dauer des größten Schadstoffausstoßes der Verbrennungskraftmaschine, wobei nach Anlassen der Verbrennungskraftmaschine
- im Abgas hinter dem Katalysator (5) ein Anspringen des Katalysators (5) durch einen Sensor (7) für Sauerstoff, Kohlendioxid, Wasserdampf oder brennbare Stoffe festgestellt wird, wobei eine Signaländerung infolge einer sprunghaften Änderung der Konzentration des Stoffes oder Stoffgemisches, für den der Sensor (7) empfindlich ist, verwendet wird,
- eine Anspringzeit des Katalysators als die Zeit zwischen dem Anlassen der Verbrennungskraftmaschine und dem Auftreten der Signaländerung erfasst wird,
- bei der Signaländerung am Sensor (7) eine Temperatur des Katalysators (5) mittels eines Temperaturmessfühlers (3) im oder am Katalysator (5) erfasst wird, und dass
- diese erfasste Temperatur als Anspringtemperatur des Katalysators verwendet wird.

2. Verfahren nach Anspruch 1, **dadurch gekennzeichnet, daß** die Anspringtemperatur und die Anspringzeit an Bord und/oder extern in Werkstätten oder Kontrollstationen auslesbar gemacht werden.

3. Verfahren nach Anspruch 1 oder 2, **dadurch gekennzeichnet, daß** als Anspringtemperatur des Katalysators (5) die Temperatur an dem Zeitpunkt bestimmt wird, an dem die Änderung des Signals des Sensors (7) oder eines daraus berechneten mathematischen Ausdrucks oder der damit berechneten Konzentration durch einen Extremwert geht.

4. Verfahren nach Anspruch 3, **dadurch gekennzeichnet, daß** der Extremwert der Änderung der Konzentration eines Stoffes oder Stoffgemisches im Abgas über die Bildung der Differenzen der in gleichkurzen Zeitabständen an dem Sensor (7) gemessenen Sensorsignale oder daraus berechneten mathematischen Ausdrücke oder damit berechneten Konzentrationen ermittelt wird.

5. Verfahren nach einem oder mehreren der Ansprüche 1 bis 4, **dadurch gekennzeichnet, daß** als Sensor (7) für die Bestimmung des Anspringens des Katalysators (5) ein Sauerstoffsensor verwendet wird, bei dem die katalytische Aktivität des Meßfühlers kleiner als die von Lambdasonden ist.

6. Verfahren nach Anspruch 5, **dadurch gekennzeichnet, daß** der verwendete Sauerstoffsensor (7) auf eine Temperatur gebracht wird, bei der seine Brenngassensitivität kleiner als seine Sauerstoffsensitivität ist.

7. Verfahren nach einem oder mehreren der Ansprüche 1 bis 6, **dadurch gekennzeichnet, daß** ein Sensor (7) verwendet wird, bei dem die Zeit vom Anlassen der Verbrennungskraftmaschine und gleichzeitigem Anschalten einer Sensorheizung bis zum Erreichen der Betriebstemperatur des Sensors (7) kleiner als die Anspringzeit des Katalysators (5) ist.

8. Verfahren nach einem oder mehreren der Ansprüche 1 bis 6, **dadurch gekennzeichnet, daß** die Beheizung des Sensors (7) vor dem Anlassen der Verbrennungskraftmaschine eingeschaltet wird.

9. Verfahren nach einem oder mehreren der Ansprüche 1 bis 8, **dadurch gekennzeichnet, daß** der Temperaturmeßfühler (3) und/oder der Sensor (7) betriebsbereit nur zeitweilig für einzelne Kontrollmessungen in einem Kraftfahrzeug in Positionen zur Ermittlung der Anspringtemperatur und/oder Anspringzeit des Katalysators (5) gebracht werden.

10. Verfahren nach einem oder mehreren der Ansprüche 1 bis 8, **dadurch gekennzeichnet, daß** der Temperaturmeßfühler (3) und/oder der Sensor (7) fest in einem Kraftfahrzeug installiert und damit jeweils nach dem Anlassen der Verbrennungskraftmaschine an Bord die Anspringtemperatur und/oder Anspringzeit ermittelt und gespeichert werden.

11. Verfahren nach einem oder mehreren der Ansprüche 1 bis 10, **dadurch gekennzeichnet, daß** die Erhöhung der Anspringtemperatur des Katalysators (5) über die Anspringtemperatur des neuen Katalysators (5) als ein die Alterung des Katalysators (5) charakterisierender Wert verwendet wird.

12. Verfahren nach einem oder mehreren der Ansprüche 1 bis 10, **dadurch gekennzeichnet, daß** das Mittel mehrerer nacheinander gemessener Anspringtemperaturen gebildet und die Erhöhung dieses Mittelwertes über den Mittelwert am Anfang der Nutzung des neuen Katalysators (5) als ein die Alterung des Katalysators (5) charakterisierender Wert verwendet wird.

13. Verfahren nach einem oder mehreren der Ansprüche 1 bis 12, **dadurch gekennzeichnet, daß** allein oder zusätzlich die Zunahme der Zeit vom Durchlaufen einer festgelegten unteren Temperatur des Katalysators (5) bis zum Erreichen der Anspringtemperatur des Katalysators (5) gegenüber dieser Zeit bei dem neuen Katalysator (5) als basisnormierte Anspringzeit zur Charakterisierung der Alterung des Katalysators (5) verwendet wird, wobei als untere Temperatur ein Wert 20 bis 100 Kelvin über dem Jahresmittel der Umgebungstemperatur im Einsatzgebiet des Kraftfahrzeugs festgelegt wird.

14. Verfahren nach einem oder mehreren der Ansprüche 1 bis 12, **dadurch gekennzeichnet, daß** allein oder zusätzlich das Mittel mehrerer basisnormierter Anspringzeiten des Katalysators (5) gebildet und die Zunahme des Mittelwertes der basisnormierten Anspringzeiten gegenüber dem Mittelwert am Anfang der Nutzungen des neuen Katalysators (5) gemessenen basisnormierten Anspringzeiten als ein die Alterung des Katalysators (5) charakterisierender Wert verwendet wird.

15. Verfahren nach einem oder mehreren der Ansprüche 1 bis 14, **dadurch gekennzeichnet, daß** die Messungen zur Verfahrensdurchführung nur ausgelöst werden, wenn die Temperatur des Katalysators (5) eine untere Temperatur, die so festgelegt ist, daß die Aufheizzeit des verwendeten Sensors (7) kürzer als die Anspringzeit des Katalysators (5) ist, nicht überschreitet.

16. Verfahren nach einem oder mehreren der Ansprüche 1 bis 15, **dadurch gekennzeichnet, daß** die Summe aller gemessenen und gespeicherten vollen Anspringzeiten gebildet und als ein für den Hauptteil der Schadstoffemission charakteristischer Wert an Bord gespeichert und dort und/oder in einer Werkstatt oder Kontrollstation lesbar gemacht wird.

17. Verfahren nach einem oder mehreren der Ansprüche 1 bis 16, **dadurch gekennzeichnet, daß** die für den Hauptteil der Schadstoffemission charakeristische Summe aller gemessenen Anspringzeiten durch die seit Beginn der Messungen von einem mit der Verbrennungskraftmaschine mit Katalysator (5) ausgerüsteten Kraftfahrzeug gefahrene Strecke dividiert und damit ein für die Nutzung des Kraftfahrzeugs charakteristischer Wert gewonnen wird.

18. Verfahren nach einem oder mehreren der Ansprüche 1 bis 17, **dadurch gekennzeichnet, daß** die Beheizung des Sensors (7) nach seiner Nutzung in der Startphase der Verbrennungskraftmaschine abgeschaltet oder reduziert wird.

19. Einrichtung zur Kontrolle und Beobachtung der Alterung des Katalysators (5) im Abgas von Verbrennungskraftmaschinen und zur Registrieung der Dauer des größten Schadstoffausstoßes der Verbrennungskraftmaschine, wobei Signalleitungen (9, 10) eines im oder am Katalysator (5) positionierten Temperaturmessfühlers (3) und eines hinter dem Katalysator (5) positionierten Sensors (7) für Sauerstoff, Kohlendioxid, Wasserdampf oder brennbare Stoffe im Abgas sowie eine ein Signal beim Anlassen der Verbrennungskraftmaschine übermittelnde elektrische Leitung (11) verbunden sind mit einer externen oder im Kraftfahrzeug installierten Auswerte- und Recheneinheit (8, 14), die die Anspringtemperatur, die Anspringzeit und/oder die basisnormierte Anspringzeit des Katalysators (5) gemäß dem Verfahren nach mindestens einem der Ansprüche 1 bis 18 ermittelt, diese Werte speichert und/oder an ein externes Kontrollgerät und/oder an ein Bordinstrument mindestens ein Signal zur Anzeige weiterleitet, das für die Alterung des Katalysators (5) und/oder einen Schadstoffausstoß charakteristisch ist.

20. Einrichtung nach Anspruch 19, **dadurch gekennzeichnet, daß** der Sensor (7) ein Sauerstoffsensor ist, dessen Meßfühler eine kleinere katalytische Aktivität als gebräuchliche Lambdasonden hat und deren Sensitivität für Brenngas bei der Betriebstemperatur kleiner als für Sauerstoff ist.

21. Einrichtung nach Anspruch 19 oder 20, **dadurch gekennzeichnet, daß** bei dem Sensor (7) die Zeit vom Anlassen der Verbrennungskraftmaschine und gleichzeitigem Anschalten der Sensorheizung bis zum Erreichen der Betriebstemperatur kürzer als die Anspringzeit des Katalysators (5) ist.

22. Einrichtung nach einem oder mehreren der Ansprüche 19 bis 21, **dadurch gekennzeichnet, daß** der Temperaturmeßfühler (3) und/oder der Sensor (7) sowie die Auswerte- und Recheneinheit (8) als Einzelteile für den Einsatz an verschiedenen Kraftfahrzeugen ausgeführt sind.

23. Einrichtung nach einem oder mehreren der Ansprüche 19 bis 21, **dadurch gekennzeichnet, daß** der Temperaturmeßfühler (3) und der Sensor (7) sowie die Auswerte- und Recheneinheit (14) mit Speichern für ermittelte Kenndaten fest im Kraftfahrzeug installiert sind.

24. Einrichtung nach Anspruch 23, **dadurch gekennzeichnet, daß** die Auswerte- und Recheneinheit (14) in einen an Bord des Fahrzeugs befindlichen Computer integriert ist.

## Claims

1. Method for monitoring and observing the ageing of a catalyst (5) in the exhaust gas of internal combustion engines and for recording the duration of the maximum pollutant emission of the internal combustion engine, wherein after starting of the internal combustion engine
- light-off of the catalyst (5) is detected in the exhaust gas downstream of the catalyst (5) by a sensor (7) for oxygen, carbon dioxide, steam or flammable substances, a signal change being used which is due to an abrupt change in the concentration of the substance or mixture to which the sensor (7) is sensitive,
- a light-off time of the catalyst is detected as the time between the starting of the internal combustion engine and the occurrence of the signal change,
- the temperature of the catalyst (5) is detected by means of a temperature sensor (3) in or on the catalyst (5) at the signal change at the sensor (7), and
- this detected temperature is used as the light-off temperature of the catalyst.

2. Method according to Claim 1, **characterized in that** the light-off temperature and the light-off time are rendered readable on board and/or externally in workshops or monitoring stations.

3. Method according to Claim 1 or 2, **characterized in that** the temperature at the time when the change in the signal of the sensor (7) or in a mathematical expression calculated therefrom or in the concentration calculated therewith passes through an extreme value is determined as the light-off temperature of the catalyst (5).

4. Method according to Claim 3, **characterized in that** the extreme value of the change in the concentration of a substance or mixture in the exhaust gas is determined by calculating the differences between the sensor signals measured at equally short time intervals by the sensor (7) or mathematical expressions calculated therefrom or concentrations calculated therewith.

5. Method according to one or more of Claims 1 to 4, **characterized in that** an oxygen sensor in which the catalytic activity of the sensor is less than that of lambda probes is used as sensor (7) for determining the light-off of the catalyst (5).

6. Method according to Claim 5, **characterized in that** the oxygen sensor (7) used is brought to a temperature at which its sensitivity to combustible gas is less than its oxygen sensitivity.

7. Method according to one or more of Claims 1 to 6, **characterized in that** a sensor (7) is used in which the time from the starting of the internal combustion engine and simultaneous switching on of a sensor heating means to the reaching of the operating temperature of the sensor (7) is less than the light-off time of the catalyst (5).

8. Method according to one or more of Claims 1 to 6, **characterized in that** the heating of the sensor (7) is switched on before the internal combustion engine is started.

9. Method according to one or more of Claims 1 to 8, **characterized in that** the temperature sensor (3) and/or the sensor (7) are brought, ready for operation, in position for determining the light-off temperature and/or light-off time of the catalyst (5) only temporarily for individual monitoring measurements in a motor vehicle.

10. Method according to one or more of Claims 1 to 8, **characterized in that** the temperature sensor (3) and/or the sensor (7) are fixed installations in a motor vehicle and consequently the light-off temperature and/or light-off time are determined and stored on board after starting of the internal combustion engine.

11. Method according to one or more of Claims 1 to 10, **characterized in that** the increase in the light-off temperature of the catalyst (5) over the light-off temperature of the fresh catalyst (5) is used as a value characterizing the ageing of the catalyst (5).

12. Method according to one or more of Claims 1 to 10, **characterized in that** the mean of a plurality of light-off temperatures measured in succession is calculated and the increase in this mean value relative to the mean value at the start of use of the fresh catalyst (5) is used as a value characterizing the ageing of the catalyst (5).

13. Method according to one of more of Claims 1 to 12, **characterized in that** the increase in the time from passing through a specified lower temperature of the catalyst (5) to reaching the light-off temperature of the catalyst (5), relative to this time for the fresh catalyst (5) is used solely or additionally as a standardized light-off time for characterizing the ageing of the catalyst (5), a value of 20 to 100 Kelvin above the annual average of the ambient temperature in the area of use of the motor vehicle being specified as the lower temperature.

14. Method according to one or more of Claims 1 to 12, **characterized in that** the mean of a plurality of standardized light-off times of the catalyst (5) is calculated solely or additionally, and the increase in the mean value of the standardized light-off times relative to the mean value of standardized light-off times measured at the start of use of the fresh catalyst (5) is used as a value characterizing the ageing of the catalyst (5).

15. Method according to one or more of Claims 1 to 14, **characterized in that** the measurements for carrying out the method are triggered only if the temperature of the catalyst (5) does not exceed a lower temperature which is specified in such a way that the heat-up time of the sensor (7) used is shorter than the light-off time of the catalyst (5).

16. Method according to one or more of Claims 1 to 15, **characterized in that** the sum of all measured and stored full light-off times is calculated and is stored on board as a value characteristic of the main part of the pollutant emission and is rendered readable there and/or in a workshop or monitoring station.

17. Method according to one or more of Claims 1 to 16, **characterized in that** the sum of all measured light-off times, which is characteristic of the main part of the pollutant emission, is divided by the distance driven by a motor vehicle, equipped with the internal combustion engine with catalyst (5), since the beginning of the measurements, and a value characteristic of the use of the motor vehicle is thus obtained.

18. Method according to one or more of Claims 1 to 17, **characterized in that** the heating of the sensor (7) after its use in the starting phase of the internal combustion engine is switched off or reduced.

19. Apparatus for monitoring and observing the ageing of the catalyst (5) in the exhaust gas of internal combustion engines and for recording the duration of the maximum pollutant emission of the internal combustion engine, signal lines (9, 10) of a temperature sensor (3) positioned in or on the catalyst (5) and of a sensor (7), positioned behind the catalyst (5), for oxygen, carbon dioxide, steam or flammable substances in the exhaust gas and an electric line (11) transmitting a signal on starting of the internal combustion engine being connected to an evaluation and computing unit (8, 14) which is external or is installed in the motor vehicle and determines the light-off temperature, the light-off time and/or the standardized light-off time of the catalyst (5) by the method according to any least one of Claims 1 to 18, stores these values and/or transmits at least one indicating signal which is characteristic of the ageing of the catalyst (5) and/or a pollutant emission to an external monitoring device and/or to an on-board instrument.

20. Apparatus according to Claim 19, **characterized in that** the sensor (7) is an oxygen sensor whose sensor has a lower catalytic activity than conventional lambda probes and whose sensitivity for combustible gas at the operating temperature is less than for oxygen.

21. Apparatus according to Claim 19 or 20, **characterized in that**, in the sensor (7), time from the starting of the internal combustion engine and simultaneous switching on of the sensor heating to the reaching of the operating temperature is shorter than the light-off time of the catalyst (5).

22. Apparatus according to one or more of Claims 19 to 21, **characterized in that** the temperature sensor (3) and/or the sensor (7) and the evaluation and computing unit (8) are designed as individual parts for use in different motor vehicles.

23. Apparatus according to one or more of Claims 19 to 21, **characterized in that** the temperature sensor (3) and the sensor (7) and the evaluation and computing unit (14) having memories for determined characteristic data are fixed installations in the motor vehicle.

24. Apparatus according to Claim 23, **characterized in that** the evaluation and computing unit (14) is integrated in a computer present on board the vehicle.

## Revendications

1. Procédé pour contrôler et observer le vieillissement d'un catalyseur (5) dans les gaz d'échappement de machines à combustion interne et pour enregistrer la durée du plus grand dégagement de substances nocives de la machine à combustion interne, où, après démarrage de la machine à combustion interne
- dans les gaz d'échappement, derrière le catalyseur (5), un lancement du catalyseur (5) est déterminé par un détecteur (7) pour l'oxygène, le dioxyde de carbone, la vapeur d'eau ou des substances combustibles, où une variation de signaux par suite d'une variation brusque de la concentration de la substance ou du mélange de substances pour laquelle le détecteur (7) est sensible, est utilisée,
- une durée de lancement du catalyseur est détectée comme étant la durée entre le démarrage de la machine à combustion interne et la survenue de la variation de signaux,
- lors de la variation de signaux au niveau du détecteur (7), une température du catalyseur (5) est détectée au moyen d'un capteur de température (3) dans ou sur le catalyseur (5), et en ce que
- cette température détectée est utilisée comme température de lancement du catalyseur.

2. Procédé selon la revendication 1, **caractérisé en ce que** la température de lancement et la durée de lancement sont rendues lisibles à bord et/ou à l'extérieur dans des ateliers ou des postes de contrôle.

3. Procédé selon la revendication 1 ou 2, **caractérisé en ce que** l'on détermine comme température de lancement du catalyseur (5) la température à l'instant auquel la variation du signal du détecteur (7) ou d'une expression mathématique calculée à partir de celui-ci ou de la concentration ainsi calculée passe par une valeur extrême.

4. Procédé selon la revendication 3, **caractérisé en ce que** la valeur extrême de la variation de la concentration d'une substance ou d'un mélange de substances dans les gaz d'échappement est déterminée par le biais de la formation des différences des signaux de détecteur mesurés à des intervalles de temps aussi courts au niveau du détecteur (7) ou d'expressions mathématiques calculées à partir de celles-ci ou de concentrations ainsi calculées.

5. Procédé selon une ou plusieurs des revendications 1 à 4, **caractérisé en ce que** l'on utilise comme détecteur (7) pour la détermination du lancement du catalyseur (5) un détecteur d'oxygène dans lequel l'activité catalytique du capteur est inférieure à celle des sondes lambda.

6. Procédé selon la revendication 5, **caractérisé en ce que** le détecteur d'oxygène (7) utilisé est porté à une température à laquelle sa sensibilité aux gaz de combustion est inférieure à sa sensibilité à l'oxygène.

7. Procédé selon une ou plusieurs des revendications 1 à 6, **caractérisé en ce que** l'on utilise un détecteur (7) dans lequel la durée depuis le démarrage de la machine à combustion interne et la mise en marche simultanée d'un chauffage de détecteur jusqu'à l'obtention de la température de fonctionnement du détecteur (7) est inférieure à la durée de lancement du catalyseur (5).

8. Procédé selon une ou plusieurs des revendications 1 à 6, **caractérisé en ce que** le chauffage du détecteur (7) est mis en marche avant le démarrage de la machine à combustion interne.

9. Procédé selon une ou plusieurs des revendications 1 à 8, **caractérisé en ce que** le capteur de température (3) et/ou le détecteur (7) ne sont mis en place, à l'état prêt à fonctionner, que temporairement pour des mesures de contrôle individuelles dans un véhicule automobile dans des positions pour déterminer la température de lancement et/ou la durée de lancement du catalyseur (5).

10. Procédé selon une ou plusieurs des revendications 1 à 8, **caractérisé en ce que** le capteur de température (3) et/ou le détecteur (7) est installé de manière fixe dans un véhicule automobile de sorte qu'après le démarrage de la machine à combustion interne, la température de lancement et/ou la durée de lancement sont déterminées et mémorisées à bord.

11. Procédé selon une ou plusieurs des revendications 1 à 10, **caractérisé en ce que** l'augmentation de la température de lancement du catalyseur (5) par rapport à la température de lancement du nouveau catalyseur (5) est utilisée comme valeur caractérisant le vieillissement du catalyseur (5).

12. Procédé selon une ou plusieurs des revendications 1 à 10, **caractérisé en ce que** la moyenne de plusieurs températures de lancement mesurées successivement est formée et l'augmentation de cette valeur moyenne par rapport à la valeur moyenne au début de l'utilisation du nouveau catalyseur (5) est utilisée comme valeur caractérisant le vieillissement du catalyseur (5).

13. Procédé selon une ou plusieurs des revendications 1 à 12, **caractérisé en ce que** l'augmentation de la durée depuis le franchissement d'une température inférieure déterminée du catalyseur (5) jusqu'à l'obtention de la température de lancement du catalyseur (5) par rapport à cette durée dans le cas du nouveau catalyseur (5) est utilisée isolément ou en complément comme durée de lancement normée par rapport à une base pour caractériser le vieillissement du catalyseur (5), où une valeur supérieure de 20 à 100 Kelvin à la moyenne annuelle de la température ambiante dans le domaine d'utilisation du véhicule automobile est fixée comme température inférieure.

14. Procédé selon une ou plusieurs des revendications 1 à 12, **caractérisé en ce que**, isolément ou en complément, la moyenne de plusieurs durées de lancement du catalyseur (5) normées par rapport à une base est formée et l'augmentation de la valeur moyenne des durées de lancement normées par rapport à une base par rapport à la valeur moyenne des durées de lancement normées par rapport à une base mesurées au début de l'utilisation du nouveau catalyseur (5) est utilisée comme valeur caractérisant le vieillissement du catalyseur (5).

15. Procédé selon une ou plusieurs des revendications 1 à 14, **caractérisé en ce que** les mesures pour la mise en oeuvre du procédé ne sont déclenchées que quand la température du catalyseur (5) ne dépasse pas une température inférieure qui est établie de telle manière que la durée de chauffage du détecteur (7) utilisé est plus courte que la durée de lancement du catalyseur (5).

16. Procédé selon une ou plusieurs des revendications 1 à 15, **caractérisé en ce que** la somme de toutes les durées de lancement totales mesurées et mémorisées est formée et est mémorisée à bord sous forme d'une valeur caractéristique de la majeure partie de l'émission de substances nocives et est rendue lisible à bord et/ou dans un atelier ou un poste de contrôle.

17. Procédé selon une ou plusieurs des revendications 1 à 16, **caractérisé en ce que** la somme, caractéristique de la meilleure partie de l'émission de substances nocives, de toutes les durées de lancement mesurées est divisée par la distance parcourue depuis le début des mesures par un véhicule automobile équipé de la machine à combustion interne avec le catalyseur (5), de sorte qu'une valeur caractéristique de l'utilisation du véhicule automobile est obtenue.

18. Procédé selon une ou plusieurs des revendications 1 à 17, **caractérisé en ce que** le chauffage du détecteur (7) est interrompu ou réduit après son utilisation dans la phase de démarrage de la machine à combustion interne.

19. Dispositif pour le contrôle et l'observation du vieillissement du catalyseur (5) dans les gaz d'échappement de machines à combustion interne et pour l'enregistrement de la durée de la plus grande émission de substances nocives de la machine à combustion interne, où des conducteurs de signaux (9, 10) d'un capteur de température (3) positionné dans ou sur le catalyseur (5) et d'un détecteur (7) pour l'oxygène, le dioxyde de carbone, la vapeur d'eau ou des substances combustibles dans les gaz d'échappement positionné derrière le catalyseur (5) ainsi qu'un conducteur électrique (11) transmettant un signal lors du démarrage de la machine à combustion interne sont reliés à une unité d'évaluation et de calcul (8, 14) externe ou installée dans le véhicule automobile, qui détermine la température de lancement, la durée de lancement et/ou la durée de lancement normée par rapport à une base du catalyseur (5) selon le procédé selon au moins l'une des revendications 1 à 18, mémorise ces valeurs et/ou transmet à un appareil de contrôle externe et/ou à un instrument de bord au moins un signal destiné à l'affichage, qui est caractéristique du vieillissement du catalyseur (5) et/ou d'un dégagement de substances nocives.

20. Dispositif selon la revendication 19, **caractérisé en ce que** le détecteur (7) est un détecteur d'oxygène dont le capteur a une activité catalytique plus faible que les sondes lambda courantes et dont la sensibilité pour les gaz de combustion à la température de fonctionnement est plus faible que pour l'oxygène.

21. Dispositif selon la revendication 19 ou 20, **caractérisé en ce que**, dans le détecteur (7), la durée depuis le démarrage de la machine à combustion interne et la mise en marche simultanée du chauffage du détecteur jusqu'à l'obtention de la température de fonctionnement est plus courte que la durée de lancement du catalyseur (5).

22. Dispositif selon une ou plusieurs des revendications 19 à 21, **caractérisé en ce que** le capteur de température (3) et/ou de détecteur (7) ainsi que l'unité d'évaluation et de calcul (8) sont agencés sous forme d'éléments individuels destinés à être utilisés sur différents véhicules automobiles.

23. Dispositif selon une ou plusieurs des revendications 19 à 21, **caractérisé en ce que** le capteur de température (3) et le détecteur (7) ainsi que l'unité d'évaluation et de calcul (14) avec des mémoires pour les données caractéristiques déterminées sont installés de manière fixe dans le véhicule automobile.

24. Dispositif selon la revendication 23, **caractérisé en ce que** l'unité d'évaluation et de calcul (14) est intégrée dans un ordinateur qui se trouve à bord du véhicule automobile.
